# FASCICULE DE BREVET EUROPEEN

(11) **EP 3 756 994 B1**
(45) Date de publication et mention de la délivrance du brevet: **12.01.2022**
(21) Numéro de dépôt: 20179545.7
(22) Date de dépôt: 11.06.2020
(51) Int. Cl.: B64C 11/00, B64C 11/06, B64C 27/48

(54) **HELICE D'AVANCEMENT MUNIE DE PALES INTERCHANGEABLES ET PROCEDE DE MONTAGE DE PALES INTERCHANGEABLES SUR UNE HELICE D'AVANCEMENT**
VORSCHUBPROPELLER, DER MIT AUSWECHSELBAREN SCHRAUBENBLÄTTERN AUSGESTATTET IST, UND MONTAGEVERFAHREN FÜR AUSWECHSELBARE SCHRAUBENBLÄTTER AUF EINEM VORSCHUBPROPELLER
DISPLACEMENT PROPELLER PROVIDED WITH INTERCHANGEABLE BLADES AND METHOD FOR MOUNTING INTERCHANGEABLE BLADES ON A DISPLACEMENT PROPELLER

(30) Priorité: 27.06.2019 FR 1907049
(43) Date de publication de la demande: 30.12.2020
(73) Titulaire: Airbus Helicopters, 13725 Marignane Cedex (FR)
(72) Inventeur: GRANT, Scott, 77360 VAIRES SUR MARNE (FR); FOURNIER, Mathias, 13090 AIX EN PROVENCE (FR); BERTHALON, Sylvain, 13880 VELAUX (FR)
(74) Mandataire: GPI Brevets

(56) Documents cités:
- FR-A1- 2 953 195
- GB-A- 2 251 896
- US-A- 3 810 713
- US-A- 5 118 256
- US-A1- 2012 034 095
- US-A1- 2015 330 233

## Description

La présente invention est du domaine des rotors d'aéronef, et en particulier des hélices d'avancement d'un aéronef.

La présente invention concerne une hélice d'avancement munie de pales interchangeables et un procédé de montage de telles pales interchangeables sur une hélice d'avancement.

Une hélice d'avancement, désignée également « hélice » par exemple, comporte traditionnellement un moyeu tournant et plusieurs pales articulées au moyeu. Le pas des pales peut généralement varier de façon collective, à savoir de façon identique pour toutes les pales.

Un aéronef, y compris un giravion, peut comporter une ou plusieurs hélices d'avancement, placées par exemple de part et d'autre du fuselage, et éventuellement sur une aile de l'aéronef. Une hélice d'avancement peut comporter au moins deux pales montées dans le moyeu, le nombre de pales étant notamment tributaire de l'effort d'avancement devant être généré.

En outre et selon un art antérieur répandu, pour chaque pale, une hélice d'avancement comporte au moins un roulement à billes agencé entre le moyeu et le pied de la pale afin de guider la rotation de la pale autour de son axe de pas. Un seul roulement à billes à contact oblique peut être utilisé pour chaque pale, comme décrit dans le document US 2012/0099991 afin de supporter les efforts générés lors de la rotation des pales.

Selon ce document US 2012/0099991, chaque pale de l'hélice d'avancement est fixée à un support. Le support est positionné dans le moyeu du rotor. Le roulement à billes à contact oblique est positionné entre le moyeu et le support et assure une butée axiale de l'ensemble support-pale sur le moyeu selon l'axe de pas de la pale et vers l'extérieur du moyeu.

Un moyen d'arrêt, par exemple un anneau élastique, est inséré entre le moyeu et le support afin d'assurer une butée axiale selon l'axe de pas de la pale et vers l'intérieur du moyeu de sorte à maintenir la pale en position lorsque l'hélice d'avancement ne tourne pas, notamment pour retenir la pale sous l'effet de son poids.

L'assemblage d'une telle hélice peut être complexe. En effet, chaque pale doit tout d'abord être fixée au support qui s'étend sensiblement parallèle à l'axe de pas de la pale. Puis, la bague intérieure du roulement à billes et un joint torique sont positionnées sur le support, la bague intérieure étant en deux parties afin de pouvoir être placée sur le support de façon radiale, un montage axial étant impossible.

L'ensemble ainsi formé peut alors être inséré dans le moyeu par l'extérieur du moyeu. Les billes du roulement à billes sont ensuite mises en place une par une sur la bague intérieure à l'intérieur du moyeu, ce qui constitue l'étape la plus contraignante. Dès lors, cet ensemble est déplacé vers l'extérieur du moyeu afin de mettre en contact les billes sur la bague extérieure du roulement à billes, cette bague extérieure étant préassemblée sur le moyeu. Enfin, le moyen d'arrêt est mis en place entre le support et le moyeu.

Ces opérations doivent être répétées pour chaque pale de l'hélice d'avancement.

En conséquence, lorsqu'une pale doit être démontée pour réparation par exemple ou bien pour être remplacée, un processus inverse, tout aussi complexe et contraignant doit être réalisé. De plus, ce démontage ainsi que le remontage des pales doivent être réalisés par un personnel compétent ce qui ajoute une contrainte supplémentaire.

Ainsi, lors qu'une pale est abîmée, l'opération de réparation ou de remplacement nécessite une expertise spécifique et ne peut éventuellement pas être réalisée par l'utilisateur de l'aéronef. L'hélice d'avancement dans son ensemble doit être transmise à un personnel compétent, ce qui entraîne une immobilisation longue et pénalisante de l'aéronef.

De plus, une hélice d'avancement peut comporter un système de variation du pas de chaque pale muni d'un système de commande de pas interne au moyeu. Le document US 2012/0099991 décrit par exemple un système hydraulique de variation de pas. Lors du montage des pales, ce système de commande de pas interne au moyeu doit être déplacé afin de permettre l'insertion des ensembles supports-pales dans le moyeu.

Par ailleurs, le document FR 3021030 décrit une pale à ancrage sécurisée dans un moyeu d'hélice. La pale comporte un pied de pale muni d'une restriction de passage afin de maintenir radialement le pied de pale dans le moyeu. Le pied de pale comporte également une fourrure d'ancrage assurant l'assemblage du pied de pale sur le moyeu. La fourrure d'ancrage comporte des moyens d'ancrage pour l'assemblage du pied de pale au moyeu ainsi que des moyens de fixation de la pale au pied de pale.

On connait aussi le document EP 1824732 qui décrit une hélice d'avancement comportant deux roulements à billes à contact oblique agencés entre chaque pale et le moyeu du rotor. Chaque pale de cette hélice d'avancement peut être déplacée le long de son axe longitudinal.

L'art antérieur comporte également le document CA 2931923 décrivant une hélice d'avancement qui ne comporte pas de roulement à billes entre le moyeu et chaque pale, mais une bague munie d'une forme en saillie coopérant avec une forme en creux de la pale afin de bloquer longitudinalement la pale contre le moyeu. Cette bague assure le guidage en rotation de la pale autour de son axe de pas.

En outre, l'arrière plan technologique de l'invention comporte le document US 6443701 qui décrit un pied de pale en matière plastique ainsi que les documents FR 2953195, US 2012/0034095, US 5118256, US 3810713, et GB 2251896.

La présente invention a alors pour objet une hélice d'avancement pour aéronef permettant de s'affranchir des limitations mentionnées ci-dessus en simplifiant le montage et le démontage de ses pales.

La présente invention vise donc une hélice d'avancement d'un aéronef munie de pales interchangeables. Cette hélice d'avancement comporte :
- un moyeu,
- au moins deux pales,
- une ferrure de fixation par pale,
- un dispositif de guidage en rotation par pale, chacun des dispositifs de guidage étant agencé entre le moyeu et une ferrure de fixation respective, et
- des premiers dispositifs de fixation desdites au moins deux pales reliant respectivement chacune desdites au moins deux pales et chacune des ferrures de fixation afin de solidariser chaque pale à une ferrure de fixation et de lier chaque pale au moyeu par l'intermédiaire respectivement d'une ferrure de fixation.

L'hélice d'avancement selon l'invention est remarquable en ce que les premiers dispositifs de fixation sont agencés à l'extérieur du moyeu de l'hélice.

Chaque ferrure de fixation est assemblée sur le moyeu par l'intérieur du moyeu. Ce montage de chaque ferrure de fixation par l'intérieur du moyeu est rendu possible, contrairement à l'art antérieur usuel décrit par exemple dans le document US 2012/0099991, par le fait que la ferrure de fixation est assemblée sur le moyeu indépendamment de la pale, la pale n'étant pas encore fixée sur la ferrure de fixation lors de ce montage.

Chaque dispositif de guidage en rotation est agencé à l'intérieur du moyeu, entre le moyeu et respectivement une ferrure de fixation associée, afin de guider en rotation respectivement chaque ferrure de fixation par rapport au moyeu autour d'un axe de rotation. Chaque dispositif de guidage permet ainsi de guider en rotation respectivement chaque pale par rapport au moyeu autour d'un axe de pas de la pale. L'axe de de pas de chaque pale correspond également à une direction radiale pour le moyeu entraînant en rotation les pales.

Le dispositif de guidage assure également le blocage axial de la ferrure de fixation sur le moyeu vers l'extérieur du moyeu selon une direction formée par l'axe de rotation du dispositif de guidage.

En conséquence de ce montage de chaque ferrure de fixation, chaque pale est fixée à une ferrure de fixation par l'intermédiaire des premiers dispositifs de fixation à l'extérieur du moyeu, contrairement à l'art antérieur usuel, décrit par exemple dans le document US 2012/0099991. De la sorte, la ferrure de fixation est insérée par l'intérieur du moyeu préalablement à l'assemblage de la pale, qui est ensuite solidarisée à la ferrure de fixation par l'extérieur du moyeu. La ferrure de fixation peut ainsi être insérée directement avec les billes et la bague intérieure du dispositif de guidage dans le moyeu.

Par exemple, le pied d'une pale peut être agencé entre deux flasques d'une ferrure de fixation. Les premiers dispositifs de fixation traversent alors les deux flasques de la ferrure de fixation afin de serrer les deux flasques contre la pale et de solidariser ainsi la pale et la ferrure de fixation. La pale est alors également liée au moyeu par l'intermédiaire de la ferrure de fixation.

Les premiers dispositifs de fixation peuvent comporter par exemple des vis et des écrous, chaque vis traversant des trous des flasques d'une ferrure de fixation et de la pale, un écrou permettant de bloquer la vis sur l'ensemble formé par une ferrure de fixation et une pale. Les premiers dispositifs de fixation peuvent également comporter des broches agencées dans de tels trous traversant une ferrure et une pale ainsi que des dispositifs de blocage, tels que des goupilles par exemple.

Au moins deux premiers dispositifs de fixation peuvent être utilisés par pale afin de solidariser efficacement la pale et la ferrure de fixation et, par suite, et de lier la pale au moyeu. De préférence, quatre dispositifs de fixation peuvent être utilisés par pale afin de s'opposer aux contraintes générées par les efforts aérodynamiques lors de la rotation du moyeu. Un nombre supérieur de dispositifs de fixation peut aussi être utilisé par pale.

Les premiers dispositifs de fixation sont agencés de préférence selon une direction perpendiculaire à un plan passant par l'axe longitudinal de la pale.

Pour démonter une pale de l'hélice d'avancement en vue d'une réparation ou d'un remplacement, il suffit alors de désolidariser la pale de la ferrure de fixation en retirant les premiers dispositifs de fixation qui sont avantageusement facilement accessibles par l'extérieur du moyeu. Ce démontage est ainsi simple et rapide. De même, le remontage de ces éléments dans le cadre de l'invention est simple et rapide.

De plus, dans le cadre de l'invention, aucune compétence spécifique n'est nécessaire pour effectuer ce remplacement au contraire des hélices de l'art antérieur. En conséquence, le temps d'immobilisation de l'aéronef pour le remplacement d'une pale sur une hélice d'avancement selon l'invention peut avantageusement être réduit au temps de démontage et remontage de la pale.

Chaque dispositif de guidage comporte par exemple au moins un roulement à billes et comporte à ce titre au moins une bague intérieure, au moins une bague extérieure et des éléments roulants. La bague intérieure de chaque dispositif de guidage est solidaire d'une ferrure de fixation et la bague extérieure est solidaire du moyeu.

En outre, la bague extérieure de chaque dispositif de guidage peut être intégrée au moyeu et/ou la bague intérieure de chaque dispositif de guidage peut être intégrée à une ferrure de fixation.

La bague extérieure de chaque dispositif de guidage peut aussi être une pièce indépendante du moyeu. La bague extérieure peut être assemblée dans le moyeu préalablement à l'insertion de chacune des ferrures de fixation dans le moyeu, voire peut être assemblée sur une ferrure de fixation. De même, la bague intérieure de chaque dispositif de guidage peut aussi être une pièce indépendante d'une ferrure de fixation. La bague intérieure peut être assemblée sur une ferrure de fixation préalablement à son insertion dans le moyeu.

Les éléments roulants de chacun des dispositifs de guidage peuvent également, de façon à faciliter leur montage, être préassemblés sur la bague intérieure ou bien sur la bague extérieure des dispositifs de guidage.

De plus, grâce au montage de chaque ferrure de fixation par l'intérieur du moyeu, la bague intérieure de chaque dispositif de guidage est avantageusement monobloc. En effet, l'art antérieur de l'invention utilise traditionnellement une bague intérieure en deux parties afin de permettre son montage sur le support, avant insertion de l'ensemble dans le moyeu par l'extérieur du moyeu comme représenté dans le document US 2012/0099991. Dans ces conditions, il n'est pas possible de monter axialement la bague intérieure sur le support, les deux parties de la bague intérieure de chaque dispositif de guidage devant être assemblées radialement sur le support.

L'utilisation d'une bague intérieure en deux parties peut provoquer notamment l'apparition d'une usure prématurée des billes et, éventuellement de la bague intérieure.

Avantageusement, l'utilisation d'une bague intérieure monobloc limite voire supprime le risque d'apparition d'une telle usure prématurée et augmente en conséquence la durée de vie de chaque dispositif de guidage de l'hélice d'avancement selon l'invention.

Chaque dispositif de guidage peut comporter un seul roulement à billes, par exemple un roulement à billes à contact oblique.

L'hélice d'avancement selon l'invention peut de plus comprendre une ou plusieurs des caractéristiques qui suivent, prises seules ou en combinaison.

Selon un aspect, l'hélice d'avancement peut comporter une pièce de blocage par pale destinée à assurer une butée axiale selon l'axe de pas de la pale et vers l'intérieur du moyeu de sorte à bloquer respectivement une ferrure de fixation radialement sur le moyeu. Chaque pièce de blocage est agencée à l'extérieur du moyeu. La fonction de cette pièce de blocage est de bloquer radialement et vers l'intérieur du moyeu la ferrure de fixation. Cette fonction est nécessaire uniquement lorsque l'hélice d'avancement est à l'arrêt, c'est-à-dire qu'elle ne tourne pas. En effet, lors de la rotation du moyeu, la force centrifuge déplace les ensembles formés respectivement par chaque pale et chaque ferrure de fixation radialement vers l'extérieur du moyeu.

La pièce de blocage peut comporter un anneau élastique, par exemple un « circlip ». Un tel anneau élastique peut être inséré dans une rainure du moyeu et coopérer avec un épaulement de la ferrure de fixation. Un tel anneau élastique peut aussi être inséré dans une rainure de la ferrure de fixation et coopérer avec la paroi extérieure du moyeu.

La pièce de blocage peut aussi comporter un organe permettant de supporter, si besoin, au moins une masse d'équilibrage destinée à l'équilibrage de l'ensemble formé par une ferrure de fixation, la pièce de blocage et une pale d'une part autour de l'axe de pas de la pale et d'autre part autour de l'axe de rotation du moyeu.

Chaque masse d'équilibrage peut être agencée sur une ferrure de fixation en lieu et place de la pièce de blocage afin d'équilibrer l'ensemble formé par une ferrure de fixation et une pale.

Par exemple, chaque ferrure de fixation ou bien chaque pièce de blocage comporte au moins une tige configurée pour recevoir au moins une masse d'équilibrage formée par une rondelle. Chaque rondelle peut alors être maintenue en position sur une tige par exemple au moyen d'un écrou.

L'hélice d'avancement peut aussi comporter des seconds dispositifs de fixation reliant respectivement une pièce de blocage et une ferrure de fixation afin de solidariser la pièce de blocage et la ferrure de fixation.

Les seconds dispositifs de fixation peuvent comporter par exemple des vis, chaque vis étant agencée dans un trou traversant une pièce de blocage et dans un trou taraudé d'une ferrure de fixation. Les seconds dispositifs de fixation peuvent également comporter des broches agencées dans des trous traversant une ferrure de fixation et une pièce de blocage ainsi que des dispositifs de blocage, tel qu'une goupille par exemple, permettant de bloquer respectivement chaque broche sur l'ensemble formé par une ferrure de fixation et une pièce de blocage. Les seconds dispositifs de fixation peuvent aussi comporter des vis et des écrous.

Selon un aspect, chaque ferrure de fixation de l'hélice d'avancement selon l'invention peut comporter un doigt de pilotage de pas et l'hélice d'avancement comporte alors un dispositif de commande de pas des pales agencé à l'intérieur du moyeu. Le dispositif de commande de pas des pales coopère alors avec le doigt de pilotage de pas de chaque ferrure de fixation afin de modifier le pas de chaque pale.

Selon un autre aspect, l'hélice d'avancement selon l'invention peut comporter un levier de pas par pale et un dispositif de commande de pas des pales, chaque levier de pas étant lié respectivement à une pièce de blocage et le dispositif de commande de pas étant agencé à l'extérieur du moyeu. Le dispositif de commande de pas des pales coopère alors avec les leviers de pas afin de modifier le pas de chaque pale.

En outre, l'hélice d'avancement selon l'invention peut comporter au moins un dispositif d'étanchéité, par exemple un joint torique, de façon connue et similaire à l'art antérieur. Ce dispositif d'étanchéité est par exemple agencé entre la ferrure de fixation et le moyeu, et positionné, selon la direction radiale du moyeu entre le dispositif de guidage et une paroi extérieure du moyeu.

La présente invention a également pour objet un procédé d'assemblage d'une hélice d'avancement d'un aéronef avec des pales interchangeables, cette hélice d'avancement comportant :
- un moyeu,
- au moins deux pales,
- une ferrure de fixation par pale, et
- un dispositif de guidage en rotation par pale.

Ce procédé d'assemblage d'une hélice d'avancement comporte les étapes suivantes réalisées de façon séquentielle :
- insertion de chaque ferrure de fixation dans le moyeu par l'intérieur du moyeu,
- montage desdites au moins deux pales respectivement sur les ferrures de fixation à l'extérieur du moyeu, et
- solidarisation des pales respectivement sur chacune des ferrures de fixation.

Selon ce procédé, l'assemblage d'une hélice d'avancement est simplifié et rapide, En effet, chaque ferrure de fixation est tout d'abord insérée dans un orifice du moyeu préalablement au montage des pales. En conséquence, cette insertion peut être faite par l'intérieur du moyeu. Ensuite, les pales sont assemblées respectivement sur les ferrures de fixation à l'extérieur du moyeu. Enfin, chaque pale est solidarisée à une ferrure de fixation, par exemple par l'intermédiaire de premiers dispositifs de fixation.

De plus, le procédé selon l'invention peut comporter une étape de positionnement d'un dispositif de guidage entre respectivement chacune des ferrures de fixation et le moyeu. Ce positionnement d'un dispositif de guidage entre respectivement chacune des ferrures de fixation et le moyeu peut être fait de façon sensiblement simultanée à l'insertion de chaque ferrure de fixation. Ce positionnement du dispositif de guidage peut aussi être fait avant l'insertion de la ferrure de fixation et éventuellement être décomposé.

Par exemple, les dispositifs de guidage comportant une bague intérieure, une bague extérieure et des éléments roulants, l'étape de positionnement d'un dispositif de guidage peut comporter les trois sous-étapes suivantes :
- assemblage de la bague extérieure des dispositifs de guidage dans le moyeu,
- assemblage de la bague intérieure des dispositifs de guidage respectivement sur chacune des ferrures de fixation, et
- assemblage des éléments roulants d'un dispositif de guidage sur la bague intérieure ou bien sur la bague extérieure du dispositif de guidage.

De la sorte, tous les éléments roulants sont avantageusement assemblés sur la bague intérieure ou bien sur la bague extérieure du dispositif de guidage de façon simultanée, en étant par exemple maintenus entre eux par une cage, contrairement à l'art antérieur où les éléments roulants sont mis en place un par un.

En outre, le procédé selon l'invention peut comporter une étape de montage d'une pièce de blocage sur chaque ferrure de fixation à l'extérieur du moyeu de sorte à bloquer radialement la ferrure de fixation sur le moyeu vers l'intérieur du moyeu.

De plus, le procédé selon l'invention peut comporter une étape supplémentaire de solidarisation de chacune des pièces de blocage sur respectivement chacune des ferrures de fixation, par exemple par l'intermédiaire de seconds dispositifs de fixation.

Par ailleurs, le procédé selon l'invention peut comporter une étape supplémentaire de fixation d'au moins une masse d'équilibrage respectivement sur au moins une des ferrures de fixation et/ou, lorsque l'hélice d'avancement comporte des pièces de blocage, sur au moins une des pièces de blocage. Une masse d'équilibrage peut être destinée à l'équilibrage de l'ensemble formé par une ferrure de fixation, une pale et éventuellement une pièce de blocage d'une part autour de l'axe de pas de la pale et d'autre part autour de l'axe de rotation du moyeu.

L'hélice d'avancement selon l'invention propose ainsi une nouvelle architecture industrialisable permettant le démontage, le remontage et/ou le remplacement d'une pale par une opération simple, rapide et peu coûteuse, ne nécessitant aucune expertise particulière. De plus, l'hélice d'avancement selon l'invention peut permettre également d'améliorer la longévité de ses dispositifs de guidage.

L'invention et ses avantages apparaîtront avec plus de détails dans le cadre de la description qui suit avec des exemples donnés à titre illustratif en référence aux figures annexées qui représentent :
- la figure 1, une hélice d'avancement d'un aéronef
- la figure 2, une vue en coupe de l'hélice d'avancement,
- les figures 3 à 10, les différentes étapes de l'assemblage d'une hélice d'avancement,
- la figure 11, une vue partielle d'une hélice d'avancement, et
- la figure 12, un schéma synoptique d'un procédé d'assemblage de l'hélice d'avancement.

Les éléments présents dans plusieurs figures distinctes sont affectés d'une seule et même référence.

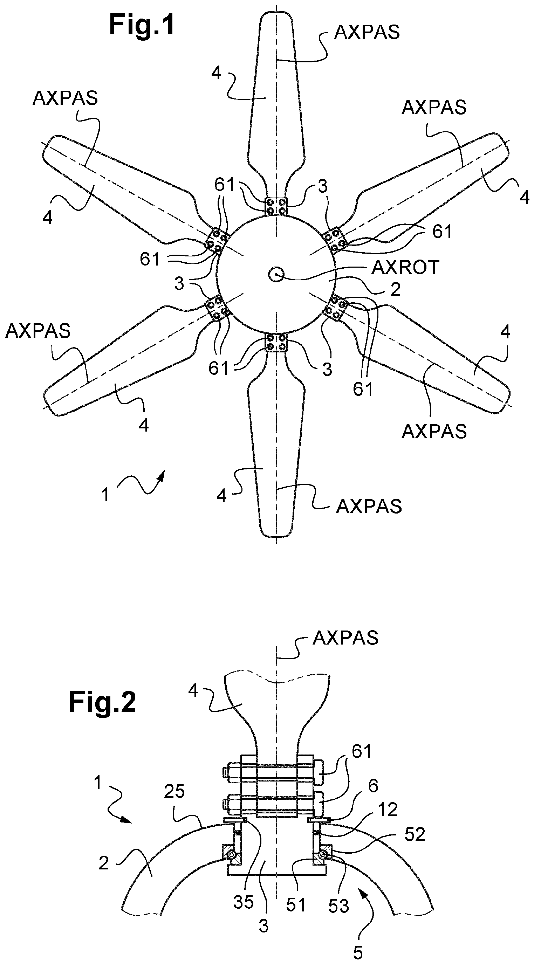

[Fig 1] L'hélice d'avancement 1 représentée sur la figure 1 est destinée à assurer l'avancement d'un aéronef, qui peut être à voilure fixe et/ou à voilure tournante. Cette hélice d'avancement comporte un moyeu portant au moins deux pales 4. L'exemple d'hélice d'avancement représenté sur la figure 1 comporte six pales, bien qu'un nombre différent de pales 4 puisse être utilisé sans remettre en cause la mise en œuvre de l'invention.

L'hélice d'avancement 1 comporte également une ferrure de fixation 3 par pale 4, chaque ferrure de fixation 3 reliant respectivement une pale 4 au moyeu 2. Des premiers dispositifs de fixation 61 solidarisent chaque pale 4 à une ferrure de fixation 3. De la sorte, les pales 4 sont liées au moyeu 2 respectivement par l'intermédiaire d'une ferrure de fixation 3 et entraînées par le moyeu 2 en rotation autour de l'axe de rotation AXROT de l'hélice 1 afin de générer une force aérodynamique d'avancement de l'aéronef.

Chaque pale 4 peut également tourner autour de son axe de pas AXPAS afin de modifier son pas. Cet axe de pas AXPAS correspond à l'axe longitudinal de la pale 4 et est selon une direction radiale pour le moyeu 2. La ferrure de fixation 3 comporte par exemple une partie de révolution autour de l'axe de pas AXPAS au niveau de la liaison avec le moyeu 2 et deux flasques au niveau de la liaison avec la pale 4.

[Fig 2] Afin d'autoriser la rotation de la pale autour de son axe de pas AXPAS, l'hélice d'avancement 1 comporte un dispositif de guidage 5 par pale 4 agencé entre le moyeu 2 et chaque ferrure de fixation 3 comme représenté sur la figure 2. Ce dispositif de guidage 5 comporte par exemple un seul roulement à billes à contact oblique muni d'une bague intérieure 51, d'une bague extérieure 52 et d éléments roulants 53, à savoir des billes dans l'exemple représenté. La bague intérieure 51 est solidaire de la ferrure de fixation 3 et la bague extérieure 52 est solidaire du moyeu 2. De la sorte, pour chaque pale 4, un dispositif de guidage 5 assure une butée axiale d'une ferrure de fixation 2 radialement vis-à-vis du moyeu 2, à savoir selon l'axe de pas AXPAS de la pale 4, et vers l'extérieur du moyeu 2.

La bague intérieure 51 peut aussi être une partie intégrante de la ferrure de fixation 3 et la bague extérieure 52 peut être une partie intégrante du moyeu 2.

La bague intérieure 51 est monobloc et peut donc être assemblée de façon axiale sur la ferrure de fixation 3.

L'hélice d'avancement 1 comporte également un dispositif d'étanchéité 12, par exemple un joint torique, agencé entre la ferrure de fixation 3 et le moyeu 2.

L'hélice d'avancement 1 peut comporter également une pièce de blocage 6 par pale 4 agencée à l'extérieur de moyeu 2. La pièce de blocage 6 peut être agencée dans une gorge 35 de la ferrure de fixation 2 et être en appui sur la paroi extérieure 25 du moyeu 2 afin d'assurer une butée axiale de la ferrure de fixation 2 radialement vis-à-vis du moyeu 2, à savoir selon l'axe de pas AXPAS de la pale 4, et vers l'intérieur du moyeu 2.

Lors de la rotation de l'hélice d'avancement 1, la force centrifuge générée déplace les pales 4 et les ferrures de fixation 3 radialement vers l'extérieur du moyeu 2, les pales 4 et les ferrures de fixation 3 étant alors retenues vis-à-vis du moyeu 2 par les dispositifs de guidage 5. Un jeu est alors présent entre la pièce de blocage 6 et le moyeu 2.

La fonction butée axiale de chaque ferrure de fixation 2 radialement vis-à-vis du moyeu 2 vers l'intérieur du moyeu 2 peut également être assurée, en absence de la pièce de blocage 6, par la pale 4 solidaire de la ferrure de fixation 3 ou bien éventuellement par les premiers dispositifs de fixation 61.

Cette pièce de blocage 6 comporte par exemple un anneau élastique, comme représenté sur la figure 2.

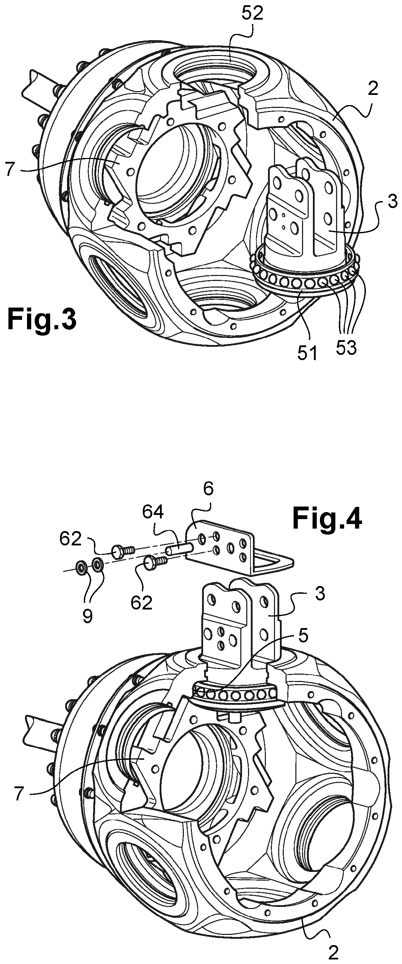

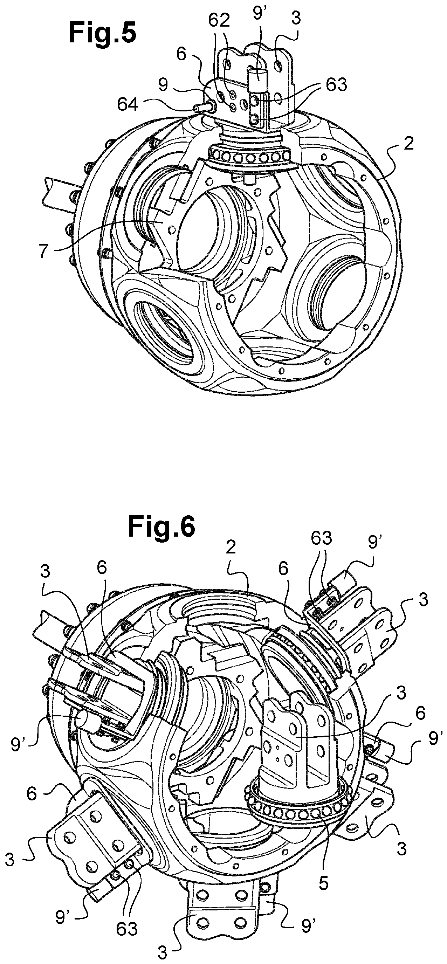

La pièce de blocage 6 peut prendre d'autres formes, comme représenté sur les figures 4 et 5.

La pièce de blocage 6 peut être fixée à la ferrure de fixation 3 par des seconds dispositifs de fixation 62, par exemple deux vis traversant des trous de la pièce de blocage et se vissant dans des trous taraudés de la ferrure de fixation 3.

La pièce de blocage 6 peut par exemple être formée par deux plaques. Une première plaque comporte un trou permettant le passage de la ferrure de fixation 3, cette première plaque étant en appui sur le moyeu 2 afin d'assurer la butée axiale de la ferrure de fixation 2 radialement vis-à-vis du moyeu 2. Une seconde plaque comporte des trous permettant d'une part le passage des premiers dispositifs de fixation 61 et d'autre part le passage des seconds dispositifs de fixation 62.

La pièce de blocage 6 peut également porter des masses d'équilibrage 9,9'. La pièce de blocage 6 peut comporter par exemple une tige 64 sur laquelle sont positionnées une ou plusieurs premières masses d'équilibrage 9 en forme de rondelles. La pièce de blocage 6 peut aussi porter une seconde masse d'équilibrage 9' fixée par des troisièmes dispositifs de fixation 63, par exemple des vis.

Les premières masses d'équilibrage 9 sont destinées à l'équilibrage de l'ensemble formé par la ferrure de fixation 3, la pale 4 et la pièce de blocage 6 autour de l'axe de rotation AXROT du moyeu 2. Une seconde masse d'équilibrage 9' est destinée à l'équilibrage de cet ensemble autour de l'axe de pas AXPAS de la pale 4.

Les masses d'équilibrage peuvent également être agencées de façon similaire en fonction des besoins sur chacune des ferrures de fixation 3 en lieu et place de la pièce de blocage 6.

Des masses d'équilibrage peuvent également être agencées de façon similaire en fonction des besoins sur chacune des ferrures de fixation 3 en compléments des masses d'équilibrage 9 agencées sur les pièces de blocage 6.

Afin de modifier le pas des pales 4, l'hélice d'avancement 1 peut comporter un système de commande de pas.

Ce système de commande de pas peut être interne au moyeu 2 de l'hélice d'avancement 1, comme représenté sur les figures 3 à 9. Ce système de commande de pas comporte par exemple un dispositif de commande de pas 7 agencé à l'intérieur du moyeu 2 et coopérant avec un doigt 31 de pilotage de pas de chaque ferrure de fixation 3. Un déplacement de ce dispositif de commande de pas 7 le long de l'axe de rotation AXROT du moyeu 2 permet de déplacer les doigts 31 de pilotage de pas afin de commander une rotation des pales 4 autour de leurs axes de pas AXPAS respectifs.

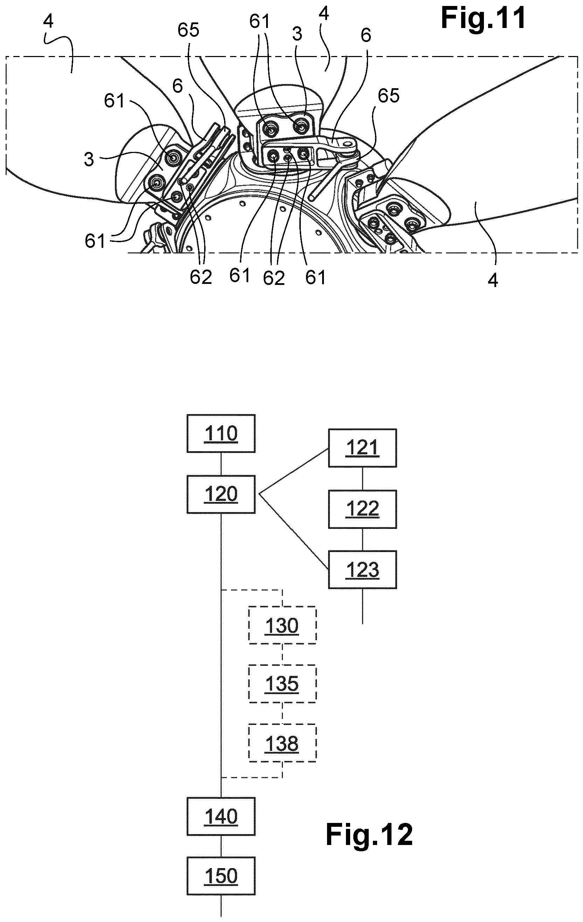

[Fig 11] Ce système de commande de pas, représenté partiellement sur la figure 11, peut alternativement être externe au moyeu 2 de l'hélice d'avancement 1. Ce système de commande de pas comporte par exemple un levier de pas 65 par pale 4 et un dispositif de commande de pas agencé à l'extérieur du moyeu 2, non représenté sur la figure 11. Chaque levier de pas 65 est lié respectivement à une pièce de blocage 6, par exemple par une liaison à rotule, et le dispositif de commande de pas 8 coopère avec les leviers de pas 65 afin de commander une rotation des pales 4 autour de leurs axes de pas AXPAS respectifs.

[Fig 12] Cette hélice d'avancement permet avantageusement de simplifier le procédé d'assemblage d'une hélice d'avancement 1 d'un aéronef avec des pales 4 interchangeables dont un schéma synoptique est représenté sur la figure 12.

Ce procédé d'assemblage d'une hélice d'avancement comporte les étapes suivantes, décrites sur les figures 3 à 12.

[Fig 3] Une insertion 110 de chaque ferrure de fixation 6 dans le moyeu 2 est réalisée par l'intérieur du moyeu 2 comme représenté sur la figure 3. Préalablement à cette insertion 110, le dispositif de commande de pas 7 agencé à l'intérieur du moyeu 2 a été déplacé selon l'axe de rotation AXROT du moyeu 2 afin de permettre cette insertion de chaque ferrure de fixation 6.

Eventuellement, un positionnement 120 de chaque dispositif de guidage 5 entre respectivement chacune des ferrures de fixation 3 et le moyeu 2 peut également être réalisé. Ce positionnement 120 de chaque dispositif de guidage 5 peut par exemple être décomposé comme suit.

Un assemblage 121 de la bague extérieure 52 dans le moyeu 2 et un assemblage 122 de la bague intérieure 51 respectivement sur chacune des ferrures de fixation sont réalisés. De plus, un assemblage 123 des éléments roulants 53 d'un dispositif de guidage 5 sur la bague intérieure 51 ou bien sur la bague extérieure 52 du dispositif de guidage est également réalisé. De la sorte, tous les éléments roulants 53, maintenus par exemple entre eux par une cage, sont avantageusement assemblés sur la bague intérieure 51 ou bien sur la bague extérieure 52 du dispositif de guidage 5 de façon simultanée.

En outre, le positionnement 120 de chaque dispositif de guidage 5 peut alternativement être réalisé sur la ferrure de fixation 3 ou bien sur le moyeu 2 préalablement à l'insertion 110 de chaque ferrure de fixation 6 dans le moyeu 2.

[Fig 4] En outre, le procédé d'assemblage peut comporter, le cas échéant, une étape de montage 130 d'une pièce de blocage 6 sur respectivement chaque ferrure de fixation 3 à l'extérieur du moyeu 2.

[Fig 5] De plus, le procédé peut aussi comporter une étape supplémentaire de solidarisation 135 de chaque pièce de blocage 6 sur respectivement chaque ferrure de fixation 3, par exemple par l'intermédiaire des seconds dispositifs de fixation 62.

[Fig 6] Les ferrures de fixation 3 peuvent ainsi être assemblées les unes après les autres dans le moyeu 2 de l'hélice d'avancement 1 comme représenté sur la figure 6.

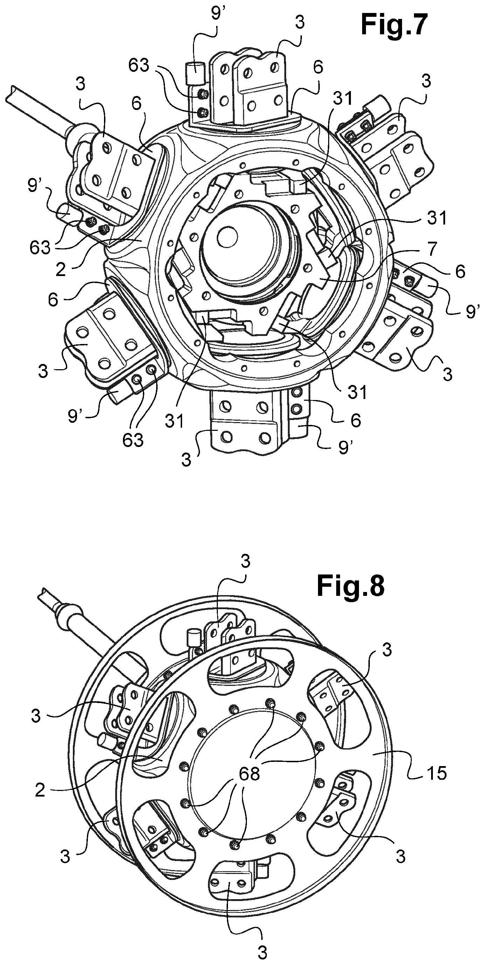

[Fig 7] Une fois la totalité des ferrures de fixation 3 en place dans le moyeu 2, le dispositif de commande de pas 7, lorsque celui est agencé à l'intérieur du moyeu 2, est déplacé selon l'axe de rotation AXROT du moyeu 2 et mis en place comme représenté sur la figure 7 de sorte que le doigt 31 de pilotage de pas de chaque ferrure de fixation 3 puisse être entraîné par ce dispositif de commande de pas 7.

[Fig 8] Ensuite, comme représenté sur la figure 8, une fermeture du moyeu 2 est éventuellement réalisée par l'intermédiaire d'un couvercle 15 solidarisé au moyeu 2 par l'intermédiaire de plusieurs quatrièmes dispositifs de fixation, par exemple des vis.

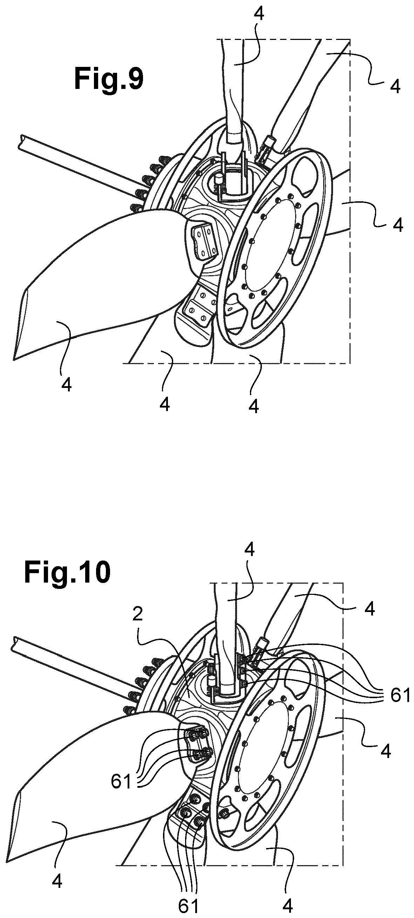

[Fig 9] Le montage 140 des pales 4 sur les ferrures de fixation 3 à l'extérieur du moyeu 2 est alors réalisé comme représenté sur la figure 9. Par exemple, l'extrémité de la pale 4 est insérée entre deux flasques de la ferrure de fixation 3.

[Fig 10] La solidarisation 150 des pales 4 sur chaque ferrure de fixation 3 comme représenté sur la figure 10 est alors réalisée. Quatre premiers dispositifs de fixation 61, comportant respectivement une vis et un écrou, sont utilisés sur cet exemple pour fixer la pale 4 à la ferrure de fixation 3.

Le procédé d'assemblage d'une hélice d'avancement 1 d'un aéronef avec des pales 4 interchangeables permet ainsi avantageusement un assemblage simplifié d'une hélice d'avancement 1. De même, le démontage des pales 4 ainsi qu'un remplacement d'une seule pale 4 peuvent être réalisés simplement et rapidement, avantageusement sans immobilisation longue de l'aéronef.

Dans le procédé décrit sur les figures 3 à 10, la totalité des ferrures de fixation 3 sont assemblées dans le moyeu 2 avant de solidariser les pales 4 sur chaque ferrure de fixation 3. Toutefois, il est envisageable de solidariser chaque pale 4 à une ferrure de fixation 3 au fur et à mesure de l'insertion des ferrures de fixation 3 dans le moyeu 2.

Par ailleurs, le procédé selon l'invention peut comporter une étape supplémentaire de fixation 138 d'au moins une masse d'équilibrage sur au moins une des ferrures de fixation 3 et/ou sur au moins une des pièces de blocage 6 le cas échéant.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Hélice d'avancement (1) d'un aéronef (10) munie de pales (4) interchangeables, ladite hélice d'avancement (1) comportant :
- un moyeu (2),
- au moins deux pales (4),
- une ferrure de fixation (3) par pale (4),
- un dispositif de guidage (5) en rotation par pale (4), chacun desdits dispositifs de guidage (5) étant agencé entre ledit moyeu et une ferrure de fixation (3) respective, et
- des premiers dispositifs de fixation (61) desdites au moins deux pales (4) reliant respectivement chacune desdites au moins deux pales (4) et chacune desdites ferrures de fixation (3) afin de solidariser chaque pale (4) à une ferrure de fixation (3) et de lier chaque pale (4) audit moyeu (2) par l'intermédiaire respectivement d'une ferrure de fixation (3), lesdits premiers dispositifs de fixation (61) sont agencés à l'extérieur du moyeu (2).

2. Hélice d'avancement (1) selon la revendication 1,
**caractérisée en ce que** chaque dispositif de guidage (5) comporte une bague intérieure (51), une bague extérieure (52) et des éléments roulants (53), ladite bague intérieure (51) étant solidaire respectivement d'une desdites ferrures de fixation (3) et ladite bague extérieure (52) étant solidaire dudit moyeu (2).

3. Hélice d'avancement (1) selon la revendication 2,
**caractérisée en ce que** ladite bague intérieure (51) est monobloc.

4. Hélice d'avancement (1) selon l'une quelconque des revendications 1 à 3,
**caractérisée en ce que** chaque ferrure de fixation (3) comporte au moins une tige (64) configurée pour recevoir au moins une masse d'équilibrage (9,9') destinée à équilibrer un ensemble formé par une ferrure de fixation (3) et une pale (4) d'une part autour de l'axe de pas de la pale (AXPAS) et d'autre part autour de l'axe de rotation du moyeu (AXROT).

5. Hélice d'avancement (1) selon l'une quelconque des revendications 1 à 4,
**caractérisée en ce que** ladite hélice d'avancement (1) comporte une pièce de blocage (6) par pale (4), chaque pièce de blocage (6) étant agencée à l'extérieur du moyeu (2) de sorte à bloquer respectivement une ferrure de fixation (3) radialement sur ledit moyeu (2) vers l'intérieur dudit moyeu (2).

6. Hélice d'avancement (1) selon la revendication 5,
**caractérisée en ce que** ladite hélice d'avancement (1) comporte des seconds dispositifs de fixation (62), chacun desdits seconds dispositifs de fixation (62) reliant une pièce de blocage (6) et une ferrure de fixation (3) afin de solidariser ladite pièce de blocage (6) et ladite ferrure de fixation (3).

7. Hélice d'avancement (1) selon l'une quelconque des revendications 5 à 6,
**caractérisée en ce que** chaque pièce de blocage (6) comporte au moins une tige (64) configurée pour recevoir au moins une masse d'équilibrage (9,9') destinée à équilibrer un ensemble formé par une ferrure de fixation (3), une pièce de blocage (6) et une pale (4) d'une part autour de l'axe de pas de la pale (AXPAS) et d'autre part autour de l'axe de rotation du moyeu (AXROT).

8. Hélice d'avancement (1) selon l'une quelconque des revendications 1 à 7,
**caractérisée en ce que** chaque ferrure de fixation (3) comporte un doigt (31) de pilotage de pas et ladite hélice d'avancement (1) comporte un dispositif de commande de pas (7) agencé à l'intérieur dudit moyeu (2) et coopérant avec ledit doigt (31) de pilotage de pas de chacune desdites ferrures de fixation (3) afin de modifier le pas de chaque pale (4).

9. Hélice d'avancement (1) selon l'une quelconque des revendications 5 à 7,
**caractérisée en ce que** ladite hélice d'avancement (1) comporte un levier de pas (65) par pale (4), chaque levier de pas (65) étant lié respectivement à une pièce de blocage (6), et ladite hélice d'avancement (1) comporte un dispositif de commande de pas agencé à l'extérieur dudit moyeu (2) et coopérant avec lesdits leviers de pas (65) afin de modifier le pas de chaque pale (4).

10. Procédé d'assemblage d'une hélice d'avancement (1) d'un aéronef avec des pales (4) interchangeables, ladite hélice d'avancement (1) comportant :
- un moyeu (2),
- au moins deux pales (4),
- une ferrure de fixation (3) par pale (4), et
- un dispositif de guidage (5) en rotation par pale (4),
ledit procédé comporte les étapes suivantes :
- insertion (110) de chaque ferrure de fixation (3) dans ledit moyeu (1) par l'intérieur dudit moyeu (2),
- montage (140) desdites au moins deux pales (4) respectivement sur lesdites ferrures de fixation (3) à l'extérieur du moyeu, et
- solidarisation (150) desdites pales (4) respectivement sur chacune desdites ferrures de fixation (3).

11. Procédé selon la revendication 10,
**caractérisé en ce que** ledit procédé comporte une étape de positionnement (120) d'un dispositif de guidage (5) entre respectivement chacune desdites ferrures de fixation (3) et ledit moyeu (2).

12. Procédé selon la revendication 11,
**caractérisé en ce que** lesdits dispositifs de guidage (5) comportant une bague intérieure (51), une bague extérieure (52) et des éléments roulants (53), ladite étape de positionnement (120) d'un dispositif de guidage (5) comporte les trois sous-étapes suivantes :
- assemblage (121) de ladite bague extérieure (52) desdits dispositifs de guidage (5) dans ledit moyeu (2),
- assemblage (122) de ladite bague intérieure (51) desdits dispositifs de guidage (5) respectivement sur chacune desdites ferrures de fixation (3), et
- assemblage (123) desdits éléments roulants (53) d'un dispositif de guidage (5) sur ladite bague intérieure (51) ou bien sur ladite bague extérieure (52) dudit dispositif de guidage (5).

13. Procédé selon l'une quelconque des revendications 10 à 12, **caractérisé en ce que** ledit procédé comporte une étape de montage (130) d'une pièce de blocage (6) sur chaque ferrure de fixation (3) à l'extérieur dudit moyeu (2) de sorte à bloquer radialement ladite ferrure de fixation (3) sur ledit moyeu (2) vers l'intérieur dudit moyeu (2).

14. Procédé selon la revendication 13,
**caractérisé en ce que** ledit procédé comporte une étape supplémentaire de solidarisation (135) de chacune desdites pièces de blocage (6) sur respectivement chacune desdites ferrures de fixation (3).

15. Procédé selon l'une quelconque des revendications 10 à 14 **caractérisé en ce que** ledit procédé comporte une étape supplémentaire de fixation (138) d'au moins une masse d'équilibrage (9,9') respectivement sur au moins une desdites ferrures de fixation (3) et/ou, lorsque ladite hélice d'avancement (1) comporte des pièces de blocage (6), sur au moins une desdites pièces de blocage (6).

## Patentansprüche

1. Propeller (1) für ein Flugzeug (10), der mit austauschbaren Blättern (4) versehen ist, wobei der Propeller (1) umfasst:
- eine Nabe (2),
- mindestens zwei Blätter (4),
- einen Befestigungsbeschlag (3) pro Blatt (4),
- eine Rotations-Führungsvorrichtung (5) pro Blatt (4), wobei jede dieser Führungsvorrichtungen (5) zwischen der Nabe und einem entsprechenden Befestigungsbeschlag (3) angeordnet ist, und
- erste Befestigungsvorrichtungen (61) für die mindestens zwei Schaufeln (4), die jede der mindestens zwei Schaufeln (4) und jeden der Befestigungsbeschläge (3) verbinden, um jede Schaufel (4) an einem Befestigungsbeschlag (3) zu befestigen und jede Schaufel (4) mit der Nabe (2) über einen Befestigungsbeschlag (3) zu verbinden,
wobei die ersten Befestigungsvorrichtungen (61) außerhalb der Nabe (2) angeordnet sind.

2. Propeller (1) nach Anspruch 1,
**dadurch gekennzeichnet, dass** jede Führungsvorrichtung (5) einen Innenring (51), einen Außenring (52) und Wälzkörper (53) umfasst, und dass der Innenring (51) jeweils mit einem der Befestigungsbeschläge (3) und der Außenring (52) mit der Nabe (2) verbunden ist.

3. Propeller (1) nach Anspruch 2,
**dadurch gekennzeichnet, dass** der Innenring (51) einstückig ist.

4. Propeller (1) nach einem der Ansprüche 1 bis 3,
**dadurch gekennzeichnet, dass** jeder Befestigungsbeschlag (3) mindestens eine Stange (64) umfasst, die ausgebildet ist, um mindestens eine Auswuchtmasse (9, 9') aufzunehmen, die dazu bestimmt ist, eine aus einem Befestigungsbeschlag (3) und einem Blatt (4) gebildete Einheit einerseits um die Blattsteigungsachse (AXPAS) und andererseits um die Nabendrehachse (AXROT) auszuwuchten.

5. Propeller (1) nach einem der Ansprüche 1 bis 4,
**dadurch gekennzeichnet, dass** der Propeller (1) ein Verriegelungsteil (6) pro Blatt (4) aufweist, wobei jedes Verriegelungsteil (6) außerhalb der Nabe (2) angeordnet ist, um jeweils einen Befestigungsbeschlag (3) radial auf der Nabe (2) zum Inneren der Nabe (2) hin zu verriegeln.

6. Propeller (1) nach Anspruch 5,
**dadurch gekennzeichnet, dass** der Propeller (1) zweite Befestigungsvorrichtungen (62) umfasst, wobei jede der zweiten Befestigungsvorrichtungen (62) ein Verriegelungsteil (6) und einen Befestigungsbeschlag (3) verbindet, um das Verriegelungsteil (6) und den Befestigungsbeschlag (3) aneinander zu fixieren.

7. Propeller (1) nach einem der Ansprüche 5 bis 6,
**dadurch gekennzeichnet, dass** jedes Verriegelungsteil (6) mindestens eine Stange (64) umfasst, die ausgebildet ist, um mindestens eine Auswuchtmasse (9, 9') aufzunehmen, die dazu bestimmt ist, eine aus einem Befestigungsbeschlag (3), einem Verriegelungsteil (6) und einem Blatt (4) gebildete Einheit einerseits um die Blattsteigungsachse (AXPAS) und andererseits um die Nabendrehachse (AXROT) auszuwuchten.

8. Propeller (1) nach einem der Ansprüche 1 bis 7,
**dadurch gekennzeichnet, dass** jeder Befestigungsbeschlag (3) einen Steigungssteuerungsfinger (31) aufweist und der Propeller (1) eine Steigungssteuerungsvorrichtung (7) aufweist, die im Inneren der Nabe (2) angeordnet ist und mit dem Steigungssteuerungsfinger (31) jedes der Befestigungsbeschläge (3) zusammenwirkt, um die Steigung jedes Blattes (4) zu verändern.

9. Propeller (1) nach einem der Ansprüche 5 bis 7,
**dadurch gekennzeichnet, dass** der Propeller (1) einen Steigungshebel (65) pro Blatt (4) umfasst, wobei jeder Steigungshebel (65) mit einem entsprechenden Verriegelungsteil (6) verbunden ist, und der Propeller (1) eine Steigungssteuervorrichtung umfasst, die außerhalb der Nabe (2) angeordnet ist und mit den Steigungshebeln (65) zusammenwirkt, um die Steigung jedes Blattes (4) zu verändern.

10. Verfahren zum Zusammenbauen eines Flugzeugpropellers (1) mit austauschbaren Blättern (4), wobei der Propeller (1) umfasst:
- eine Nabe (2),
- mindestens zwei Blätter (4),
- einen Befestigungsbeschlag (3) pro Blatt (4) und
- eine Rotations-Führungsvorrichtung (5) pro Blatt (4),
wobei das Verfahren die folgenden Schritte umfasst:
- Einsetzen (110) jedes Befestigungsbeschlags (3) in die Nabe (1) vom Inneren der Nabe (2) her,
- Anbringen (140) der mindestens zwei Blätter (4) jeweils an den Befestigungsbeschlägen (3) außerhalb der Nabe, und
- Befestigen (150) der Blätter (4) jeweils an jedem der Befestigungsbeschläge (3).

11. Verfahren nach Anspruch 10,
**dadurch gekennzeichnet, dass** das Verfahren einen Schritt des Positionierens (120) einer Führungsvorrichtung (5) jeweils zwischen jedem der Befestigungsbeschläge (3) und der Nabe (2) umfasst.

12. Verfahren nach Anspruch 11,
**dadurch gekennzeichnet, dass** die Führungsvorrichtungen (5) einen Innenring (51), einen Außenring (52) und Wälzkörper (53) umfassen, wobei der Schritt des Positionierens (120) einer Führungsvorrichtung (5) die folgenden drei Teilschritte umfasst:
- Einbauen (121) des Außenrings (52) der Führungsvorrichtungen (5) in der Nabe (2);
- Einbauen (122) des Innenrings (51) der Führungsvorrichtungen (5) jeweils an jedem der Befestigungsbeschläge (3), und
- Einbauen (123) der Wälzkörper (53) einer Führungsvorrichtung (5) an dem Innenring (51) oder dem Außenring (52) der Führungsvorrichtung (5).

13. Verfahren nach einem der Ansprüche 10 bis 12,
**dadurch gekennzeichnet, dass** das Verfahren einen Schritt des Anbringens (130) eines Verriegelungsteils (6) an jedem Befestigungsbeschlag (3) außerhalb der Nabe (2) umfasst, um den Befestigungsbeschlag (3) an der Nabe (2) radial zum Inneren der Nabe (2) hin zu verriegeln.

14. Verfahren nach Anspruch 13,
**dadurch gekennzeichnet, dass** das Verfahren einen zusätzlichen Schritt des Befestigens (135) jedes der Verriegelungsteile (6) an jedem der jeweiligen Befestigungsbeschläge (3) umfasst.

15. Verfahren nach einem der Ansprüche 10 bis 14,
**dadurch gekennzeichnet, dass** das Verfahren einen zusätzlichen Schritt des Befestigens (138) mindestens einer Auswuchtmasse (9, 9') an mindestens einem der Befestigungsbeschläge (3) und/oder, wenn der Propeller (1) Verriegelungsteile (6) aufweist, an mindestens einem der Verriegelungsteile (6) umfasst.

## Claims

1. Advancement propeller (1) of an aircraft (10) with interchangeable blades (4), said advancement propeller (1) comprising:
- a hub (2),
- at least two blades (4),
- one fastening fitting (3) per blade (4),
- one rotational guide device (5) per blade (4), each of said guide devices (5) being arranged between said hub and a respective fastening fitting (3), and
- first fastening devices (61) for said at least two blades (4) which respectively connect each of said at least two blades (4) and each of said fastening fittings (3) in order to secure each blade (4) to an fastening fitting (3) and to respectively connect each blade (4) to said hub (2) by means of an fastening fitting (3), said first fastening devices (61) being arranged outside the hub (2).

2. Advancement propeller (1) according to claim 1,
**characterised in that** each guide device (5) comprises an inner ring (51), an outer ring (52) and rolling elements (53), said inner ring (51) being secured respectively to one of said fastening fittings (3) and said outer ring (52) being secured to said hub (2).

3. Advancement propeller (1) according to claim 2,
**characterised in that** said inner ring (51) is in one piece.

4. Advancement propeller (1) according to any of claims 1 to 3,
**characterised in that** each fastening fitting (3) comprises at least one rod (64) designed to receive at least one balancing mass (9, 9') intended to balance an assembly formed by an fastening fitting (3) and a blade (4) about the pitch axis of the blade (AXPAS) and about the axis of rotation of the hub (AXROT).

5. Advancement propeller (1) according to any of claims 1 to 4,
**characterised in that** said advancement propeller (1) comprises one locking part (6) per blade (4), each locking part (6) being arranged outside the hub (2) so as to respectively lock one fastening fitting (3) radially on said hub (2) towards the inside of said hub (2).

6. Advancement propeller (1) according to claim 5,
**characterised in that** said advancement propeller (1) comprises second fastening devices (62), each of said second fastening devices (62) connecting a locking part (6) and an fastening fitting (3) in order to secure said locking part (6) and said fastening fitting (3).

7. Advancement propeller (1) according to any of claims 5 to 6,
**characterised in that** each locking part (6) comprises at least one rod (64) designed to receive at least one balancing mass (9, 9') intended to balance an assembly formed by an fastening fitting (3), a locking part (6) and a blade (4) about the pitch axis of the blade (AXPAS) and about the axis of rotation of the hub (AXROT).

8. Advancement propeller (1) according to any of claims 1 to 7,
**characterised in that** each fastening fitting (3) comprises a pitch control finger (31) and said advancement propeller (1) comprises a pitch control device (7) which is arranged inside said hub (2) and cooperates with said pitch control finger (31) of each of said fastening fittings (3) in order to modify the pitch of each blade (4).

9. Advancement propeller (1) according to any of claims 5 to 7,
**characterised in that** said advancement propeller (1) comprises one pitch lever (65) per blade (4), each pitch lever (65) being respectively connected to a locking part (6), and said advancement propeller (1) comprises a pitch control device arranged outside said hub (2) and cooperating with said pitch levers (65) in order to modify the pitch of each blade (4).

10. Method for assembling an advancement propeller (1) of an aircraft with interchangeable blades (4), said advancement propeller (1) comprising:
- a hub (2),
- at least two blades (4),
- one fastening fitting (3) per blade (4), and
- one rotational guide device (5) per blade (4),
and the method comprises the following steps:
- inserting (110) each fastening fitting (3) into said hub (1) from inside said hub (2),
- mounting (140) said at least two blades (4) respectively on said fastening fittings (3) from outside the hub, and
- securing (150) said blades (4) respectively on each of said fastening fittings (3).

11. Method according to claim 10,
**characterised in that** said method comprises a step of positioning (120) a guide device (5) respectively between each of said fastening fittings (3) and said hub (2).

12. Method according to claim 11,
**characterised in that**, said guide devices (5) comprising an inner ring (51), an outer ring (52) and rolling elements (53), said step of positioning (120) a guide device (5) comprises the following three sub-steps:
- assembling (121) said outer ring (52) of said guide devices (5) into said hub (2),
- assembling (122) said inner ring (51) of said guide devices (5) respectively onto each of said fastening fittings (3), and
- assembling (123) said rolling elements (53) of a guide device (5) onto said inner ring (51) or onto said outer ring (52) of said guide device (5).

13. Method according to any of claims 10 to 12,
**characterised in that** said method comprises a step of mounting (130) a locking part (6) on each fastening fitting (3) from outside said hub (2) so as to radially lock said fastening fitting (3) on said hub (2) towards the inside of said hub (2).

14. Method according to claim 13,
**characterised in that** said method comprises an additional step of respectively securing (135) each of said locking parts (6) on each of said fastening fittings (3).

15. Method according to any of claims 10 to 14
**characterised in that** said method comprises an additional step of attaching (138) at least one balancing mass (9, 9') respectively on at least one of said fastening fittings (3) and/or, when said advancement propeller (1) comprises locking parts (6), on at least one of said locking parts (6).
